# EUROPÄISCHE PATENTANMELDUNG

(11) **EP 4 597 398 A1**
(43) Veröffentlichungstag der Anmeldung: **06.08.2025**
(21) Anmeldenummer: 24155104.3
(22) Anmeldetag: 31.01.2024
(51) Int. Cl.: G06Q 30/018, G07F 13/02, B67D 7/34, B60L 53/66

(54) **VERFAHREN ZUR ZERTIFIZIERTEN BETANKUNG EINES FAHRZEUGS**

(71) Anmelder: Cryoshelter LH2 GmbH, 8143 Dobl-Zwaring (AT); Cryoshelter BioLNG GmbH, 8143 Dobl-Zwaring (AT)
(72) Erfinder: Rebernik, Matthias, 8010 Graz (AT)
(74) Vertreter: Schwarz & Partner Patentanwälte GmbH

(57) **Zusammenfassung**

Die Erfindung betrifft ein Verfahren zur Betankung in einem System umfassend ein Fahrzeug (1) und eine Auswerteeinheit (9),
wobei das Fahrzeug (1) einen Fahrzeugtank (2) und eine Betankungseinheit aufweist, wobei weiters eine ansteuerbare Sperreinrichtung (10) in der Betankungseinheit vorliegt,
wobei das Verfahren die folgenden Schritte umfasst:
- in der Tankstelle (3), Senden einer Anfragenachricht an die Auswerteeinheit (9), wobei die Anfragenachricht einen Kennwert einer CO2-Bilanz des Kraftstoffes oder eine Identifikation der Herkunft des Kraftstoffes sowie eine Identifikation des Fahrzeugs umfasst,
- in der Auswerteeinheit (9), Empfangen der Anfragenachricht und Überprüfen, ob eine Berechtigung vorliegt, dass das Fahrzeug (1) mit diesem Kraftstoff betankt werden darf,
- in der Auswerteeinheit (9), Senden einer Freigabenachricht an die Sperreinrichtung (10), wenn das in der Anfragenachricht spezifizierte Fahrzeug (1) mit dem Kraftstoff betankt werden darf,

wobei die Sperreinrichtung (10) in einem dauerhaft geschlossenem Zustand vorliegt und nur nach Erhalt der Freigabenachricht öffenbar ist.

## Beschreibung

Die Erfindung betrifft ein Verfahren zur Betankung in einem System umfassend ein Fahrzeug und eine Auswerteeinheit.

Aus dem Stand der Technik ist bekannt, Fahrzeuge mit unterschiedlichsten Kraftstoffen zu betanken. Soll das Fahrzeug betankt werden, wird das Fahrzeug zu einer Tankstelle verbracht und es wird ein Kraftstoff ausgewählt, der für den Motor des Fahrzeugs geeignet ist.

Probleme könnten auftreten, wenn der Motor des Fahrzeugs beispielsweise nur mit Diesel betrieben werden kann, aber das Fahrzeug versehentlich mit Benzin betankt wird, wodurch beispielsweise Motorschäden auftreten können. Um dies zu verhindern, sieht das in der Druckschrift DE 10 2006 044 780 A1 offenbarte Verfahren vor, eine Kommunikation zwischen Tankstelle und Fahrzeug aufzubauen. Das Fahrzeug zeigt dabei der Tankstelle an, welcher Kraftstoff für den Motor des Fahrzeugs geeignet ist (z.B. Benzin oder Diesel), woraufhin die Tankstelle die Betankung freigibt oder auch ein entsprechendes Warnsignal ausgibt.

Unabhängig von dem oben erläuterten Problem der versehentlichen Falschbetankung, bei der es zu Motorschäden kommen kann, könnten an der Tankstelle jedoch auch mehrere unterschiedliche Kraftstoffe bereitgestellt werden, die alle für das Fahrzeug geeignet sind. Als Beispiel hierfür können fossiles Methan (d.h. Methan fossilen Ursprungs) und Biomethan (d.h. aus biogenen Stoffen erzeugtes und daher im Wesentlichen CO2-neutrales Methan) genannt werden. Unabhängig davon, ob das Fahrzeug mit fossilem Methan oder Biomethan betankt wird, wird es jedenfalls nicht zu einem Motorschaden kommen.

Es ist jedoch ein Bestreben der modernen Fahrzeugtechnik, dass Fahrzeuge ausschließlich mit CO2-neutralen Kraftstoffen betrieben werden. Im Beispiel von fossilem Methan und Biomethan könnte zwar gesetzlich vorgegeben werden, dass Tankstellen nur mehr Biomethan anbieten dürfen, was jedoch nicht ausschließt, dass der Benutzer des Fahrzeugs schlichtweg eine andere Tankstelle im Ausland aufsucht, die nicht derartigen Beschränkungen unterliegt und daher fossiles Methan anbieten kann. Weiters könnten dem Benutzer Sanktionen auferlegt werden, wenn dieser sein Fahrzeug mit fossilem Methan betankt, jedoch unterscheiden sich fossiles Methan und Biomethan nicht in ihrer chemischen Zusammensetzung, sodass ein nachträgliches Überprüfen des getankten Kraftstoffes durch chemische Tests nicht möglich ist.

Es ist die Aufgabe der Erfindung, ein Fahrzeug, bzw. ein Betankungssystem für Fahrzeuge bereitzustellen, bei denen sichergestellt ist, dass das Fahrzeug über seine gesamte Lebensdauer nur mit umweltschonendem Kraftstoff betankt wird.

Diese Aufgabe wird gelöst durch ein Verfahren zur Betankung in einem System umfassend ein Fahrzeug und eine Auswerteeinheit,
wobei das Fahrzeug einen Energiespeicher, insbesondere einen Fahrzeugtank zur Lagerung von fluidem Kraftstoff, und eine mit dem Energiespeicher verbundene Einspeiseeinheit aufweist, wobei weiters eine ansteuerbare Sperreinrichtung in der Einspeiseeinheit vorliegt, und wobei die Sperreinrichtung in einem geöffneten Zustand das Betanken ermöglicht und in einem geschlossenen Zustand das Betanken verhindert,
wobei das Verfahren die folgenden Schritte umfasst:
   - Auswählen eines gewünschten Kraftstoff und Senden einer Anfragenachricht an die Auswerteeinheit, wobei die Anfragenachricht einen Kennwert eines Umwelteinflusses, insbesondere eine CO2-Bilanz, des gewählten Kraftstoffes oder eine Identifikation der Herkunft des gewählten Kraftstoffes umfasst, wobei diese Schritte bevorzugt alle in einer Tankstelle stattfinden,
   - in der Auswerteeinheit, Empfangen der Anfragenachricht und Überprüfen, ob eine Berechtigung vorliegt, dass das Fahrzeug gemäß dem in der Anfragenachricht spezifizierten Kennwert des Umwelteinflusses des Kraftstoffes oder der Identifikation der Herkunft des Kraftstoffes mit diesem Kraftstoff betankt werden darf,
   - in der Auswerteeinheit, Senden einer Freigabenachricht an die Sperreinrichtung zum Öffnen der Sperreinrichtung, wenn die Überprüfung ergab, dass das Fahrzeug mit dem Kraftstoff betankt werden darf,
wobei die Sperreinrichtung in einem Normalzustand in einem geschlossenen Zustand vorliegt und nur nach Erhalt der Freigabenachricht für den Zeitraum der Betankung und gegebenenfalls über einen Not-Schalter öffenbar ist. In anderen Worten ist die Sperreinrichtung dauerhaft geschlossen und wird nur nach Erhalt der Freigabenachricht für den Zeitraum der Betankung und gegebenenfalls über einen Not-Schalter geöffnet.

Dieses System hat den Vorteil, dass sichergestellt werden kann, dass das Kraftfahrzeug über seine gesamte Lebensdauer nur mit einem umweltschonenden Kraftstoff betankt wird. Da die Sperreinrichtung dauerhaft in einem geschlossenen Zustand vorliegt, wird insbesondere verhindert, dass der Benutzer unautorisiert einen umweltbelastenden Kraftstoff in das Fahrzeug tankt. Erst wenn die Freigabenachricht vorliegt, um die Sperreinrichtung zu entsperren, kann das Fahrzeug betankt werden.

Das Erzeugen der Freigabenachricht beruht im Gegensatz zum Stand der Technik nicht oder nicht nur darauf, dass überprüft wird, ob der Kraftstoff schädlich für einen Motor des Fahrzeugs sein könnte. Erfindungsgemäß wird überprüft, ob der Kraftstoff umweltschonend ist, was dadurch erfolgt, dass ein Kennwert eines Umwelteinflusses, z.B. eine CO2-Bilanz, des Kraftstoffs oder die Herkunft des Kraftstoffs überprüft wird.

Eine Überprüfung, ob das Fahrzeug berechtigt ist, mit einem Kraftstoff mit einem bestimmten Umwelteinfluss betankt zu werden, kann beispielsweise mit einem Schwellwertabgleich stattfinden. Hierzu kann die Auswerteeinheit eingangs einen Schwellwert für den Kennwert des Umwelteinflusses des Kraftstoffs heranziehen, wobei dieser Schwellwert als einziger Schwellwert in der Auswerteeinheit hinterlegt sein kann (z.B. wenn die Auswerteeinheit am Fahrzeug vorliegt) oder der Schwellwert könnte in einer Datenbank vorliegen, wobei einem oder mehreren Fahrzeugen Schwellwerte für den Kennwert des Umwelteinflusses zugeordnet sind, z.B. ist in der Datenbank einer eindeutigen Fahrzeugidentifikation jeweils ein Schwellwert zugeordnet oder einer Fahrzeuggruppe (eine Gruppe ist z.B. Personenkraftwagen und eine andere Gruppe ist z.B. sicherheitskritische Fahrzeuge) jeweils ein Schwellwert zugeordnet. Bevorzugt umfasst der Schritt des Überprüfens, ob eine Berechtigung vorliegt, daher den Schritt des Überprüfens, ob der in der Anfragenachricht spezifizierte Kennwert des Umwelteinflusses unterhalb eines für das Fahrzeug vorgesehenen Schwellwerts liegt.

Der genannte Kennwert des Umwelteinflusses eines Kraftstoffes kann, für einen Kohlenstoff umfassenden Kraftstoff, beispielsweise als das bei der Verbrennung des Kraftstoffes freigesetzte CO2 abzüglich eines biogenen Anteils von Kohlenstoff, der im Kraftstoff gebunden ist, definiert werden, wobei hier auch von einer CO2-Bilanz gesprochen werden kann. Bei einem Kraftstoff wie Wasserstoff, der keinen Kohlenstoff umfasst, kann die CO2-Bilanz beispielsweise als das bei der Herstellung des Kraftstoffes freigesetzte CO2 herangezogen werden, sofern der Kraftstoff nicht durch erneuerbare Energien hergestellt wurde. Es versteht sich, dass dem Fachmann viele weitere und wesentlich genauere Definitionen für Kennwerte der CO2-Bilanz bekannt sind. In einem Beispiel kann der Kennwert der CO2-Bilanz des Kraftstoffs als Relativwert für den betankten Kraftstoff, z.B. X kg CO2 pro kg Kraftstoff oder als Absolutwert für den betankten Kraftstoff, z.B. Y kg CO2, angegeben werden. Es kann auch der Relativwert zusammen mit einer Menge des Kraftstoffs herangezogen werden. Weiters können beispielsweise auch CO2-Äquivalente von Methanemissionen (oder anderen Emissionen) oder gesundheitsrelevante Kennwerte in den Kennwert des Umwelteinflusses einfließen.

Eine Überprüfung, ob das Fahrzeug berechtigt ist, mit einem Kraftstoff mit einer bestimmten Herkunft betankt zu werden, kann dadurch erfolgen, dass die Auswerteeinheit eine Datenbank hinterlegt hat, in der die Herkunft des Kraftstoffes mit einem Kennwert des Umwelteinflusses verknüpft ist, sodass wieder der oben erläuterte Schwellwertvergleich durchführbar ist. Diese Überprüfung kann jedoch verkürzt werden, wenn alle für die Überprüfung relevanten Daten in eine Datenbank aufgenommen werden, in der z.B. spezifiziert ist, dass für das Fahrzeug X der Kraftstoff mit der Herkunft Y erlaubt ist. Als Beispiel kann genannt werden, dass in dieser Datenbank spezifiziert ist, dass Methan mit einer biogenen Herkunft für Personenkraftwagen erlaubt ist. Es versteht sich weiters, dass die Herkunft durch eine eindeutige Identifikationsnummer oder ähnlichem angegeben werden kann.

Die Technizität des erfindungsgemäßen Verfahrens ist dadurch begründet, dass mit dem erfindungsgemäßen Verfahren der Umwelteinfluss, insbesondere der CO2-Ausstoß, von Fahrzeugen auf eine vorgegebene Grenze gesetzt werden kann. Es ist nicht möglich, das Fahrzeug derart zu betanken, dass diese Grenze überschritten werden könnte. In anderen Worten wird der Umwelteinfluss des Fahrzeuges durch die im Verfahren angegebenen technischen Mitteln begrenzt.

Insbesondere bieten sich drei Ausführungsformen an, um die erfindungsgemäße Auswerteeinheit zu verwirklichen. Erstens kann die Auswerteeinheit in einem entfernten Server angeordnet werden, zweitens am Fahrzeug und drittens an der Tankstelle.

In der ersten bevorzugten Ausführungsform liegt die Auswerteeinheit in einem Server vor, wobei ein Sendeempfänger einer Tankstelle oder eines Tankstellensystems die Anfragenachricht an den Server sendet und wobei das Fahrzeug einen Sendeempfänger aufweist, welcher die Freigabenachricht vom Server empfängt. Diese Ausführungsform ist besonders bevorzugt, da die sicherheitskritische Auswerteeinheit so räumlich vom Fahrzeug und von der Tankstelle entfernt sein kann, wodurch eine unbefugte Manipulation der Auswerteeinheit weitgehend unterbunden werden kann.

In der zweiten bevorzugten Ausführungsform kann vorgesehen werden, dass die Auswerteeinheit am Fahrzeug vorliegt und ein Sendeempfänger einer Tankstelle oder eines Tankstellensystems die Anfragenachricht an einen mit der Auswerteeinheit verbundenen Sendeempfänger am Fahrzeug sendet. Dies hat den Vorteil, dass die Auswerteeinheit möglichst nahe an der Sperreinrichtung vorliegen kann, wodurch der Übertragungsweg der Freigabenachricht minimiert wird, sodass diese schwerer fälschbar ist. Weiter kann die gesamte Kommunikation nur zwischen Tankstelle und Fahrzeug durchgeführt werden, bevorzugt nur mittels einer unmittelbaren Kommunikation, z.B. einer Kurzreichweitenkommunikation.

In der dritten bevorzugten Ausführungsform kann vorgesehen werden, dass die Auswerteeinheit an einer Tankstelle vorliegt und die Tankstelle einen mit der Auswerteeinheit verbundenen Sendeempfänger aufweist, welcher die Freigabenachricht an einen mit der Sperreinrichtung verbundenen Sendeempfänger am Fahrzeug sendet. In dieser Ausführungsform kann insbesondere der Kommunikationsweg für die Anfragenachricht minimiert werden, sodass diese schwerer fälschbar ist. Auch hier kann die gesamte Kommunikation nur zwischen Tankstelle und Fahrzeug durchgeführt werden.

In einer bevorzugten Ausführungsform der Erfindung umfasst das Verfahren die Schritte:
- Hinterlegen eines ersten Zertifikats in der Tankstelle, wobei das erste Zertifikat als Teil der Anfragenachricht an die Auswerteeinheit gesandt wird; und
- Überprüfen der Authentizität des ersten Zertifikats in der Auswerteeinheit vor dem Überprüfen oder Senden der Freigabenachricht.

Alternativ oder zusätzlich kann vorgesehen werden, dass das Verfahren die folgenden Schritte umfasst:
- Hinterlegen eines zweiten Zertifikats in der Auswerteeinheit, wobei das zweite Zertifikat als Teil der Freigabenachricht an die Sperreinrichtung gesandt wird; und
- Überprüfen der Authentizität des zweiten Zertifikats in der Sperreinrichtung oder einer damit verbundenen Recheneinheit vor dem Öffnen der Sperreinrichtung.

In den zwei vorstehenden Varianten mit dem ersten bzw. zweiten Zertifikat wird ein zusätzliches Sicherheitslevel gegen betrügerische Versuche zur Umgehung des Systems eingeführt. Konkret wird durch das Zertifikat verhindert, dass die Anfragenachricht oder die Freigabenachricht durch einen Betrüger "vorgetäuscht" wird, da der Betrüger nicht in Besitz eines authentischen Zertifikats sein wird. Zur Umsetzung des Zertifikats sind im Fachgebiet der Kryprographie viele Möglichkeiten bekannt. In einem Beispiel kann das jeweilige Zertifikat von einer unabhängigen Instanz vergeben werden und die zu überprüfende Einheit kann nach Erhalt der mit dem Zertifikat versehenen Nachricht bei der unabhängigen Instanz überprüfen lassen, ob das Zertifikat und damit die Nachricht authentisch ist. Erfindungsgemäß ist die Sperreinrichtung im Normalzustand geschlossen und wird nur nach Erhalt der Freigabenachricht geöffnet. Sollte dies die einzige Möglichkeit sein, die Sperreinrichtung zu öffnen, könnte in einigen Fällen (beispielsweise wenn die Kommunikation zwischen Fahrzeug, Tankstelle und/oder Server durch technische Probleme nicht funktioniert) ein Fahrzeug mit einem leeren Tank dauerhaft und unbetankbar an einer Tankstelle stehen bleiben. Erfindungsgemäß wird dies unterbunden, wenn die Sperreinrichtung nicht nur durch die Freigabenachricht, sondern auch durch Betätigen eines Not-Schalters öffenbar ist. Es gibt daher entweder nur eine Möglichkeit zur Öffnung der Sperreinrichtung (Freigabenachricht) oder nur zwei Möglichkeiten zur Öffnung der Sperreinrichtung (Freigabenachricht und Not-Schalter). Der Not-Schalter kann auch als Service-Schalter ausgeführt sein, um die Sperreinrichtung für wartungszwecke zu öffnen.

Sollte die Sperreinrichtung jedoch mittels eines Not-Schalters öffenbar sein, wird bevorzugt vorgesehen, wenn das Betätigen des Not-Schalters den folgenden Schritt auslöst: Öffnen der Sperreinrichtung und Ausgeben eines Not-Signals. Durch das Not-Signal kann beispielsweise einer externen Einheit angezeigt werden, dass zumindest einmal der Versuch vorlag, das Fahrzeug ohne einer vorliegenden Freigabenachricht zu betanken. Das Vorliegen eines Not-Signals kann im einfachsten Fall in einem auslesbaren Speicher am Fahrzeug aufgezeichnet werden oder das Not-Signal kann mittels eines Sendeempfängers an eine Zentrale wie an einen entfernten Server gesandt werden.

In der vorgenannten Ausführungsform kann das Not-Signal auch an eine Motorsteuerung ausgegeben werden und die Motorsteuerung ermöglicht nach Erhalt des Not-Signals nur einen Fahrzeugbetrieb mit eingeschränkter Leistung. In dieser Art und Weise kann eine unmittelbare technische Sanktion am Fahrzeug vorgenommen werden, um das nicht ordnungsgemäß betankte Fahrzeug noch in einem Notlaufmodus ("limp home"-Zustand) an eine Betriebsstelle oder ähnlichem zu verbringen.

In einer bevorzugten Ausführungsform umfasst das System ferner eine Tankstelle, welche einen ersten Kraftstoff und einen zweiten Kraftstoff zur Verfügung stellt, wobei der erste Kraftstoff und der zweite Kraftstoff eine im Wesentlichen gleiche chemische Zusammensetzung aber einen unterschiedlichen Kennwert des Umwelteinflusses des Kraftstoffes oder eine unterschiedliche Identifikation der Herkunft des Kraftstoffes aufweisen.

In einer bevorzugten Ausführungsform weist die Tankstelle einen ersten Zapfhahn, über welchen der erste Kraftstoff betankbar ist, und einen zweiten Zapfhahn, über welchen der zweite Kraftstoff betankbar ist, auf, wobei die Betankungseinheit des genannten Fahrzeugs eine Befüllkupplung aufweist, in welche der erste Zapfhahn einführbar ist, aber nicht der zweite Zapfhahn. Durch diese Ausführung der Zapfhähne und der Befüllkupplung als "Schlüsselsystem" wird auch auf einem Hardwarelevel verhindert, dass der Benutzer umweltbelastenden Kraftstoff tankt.

In einer bevorzugten Ausführungsform umfasst das System fernen ein Legacy-Fahrzeug, welches eine Legacy-Befüllkupplung zur Betankung aufweist, wobei sowohl der erste Zapfhahn als auch der zweite Zapfhahn in die Legacy-Befüllkupplung einführbar sind. Dadurch wird auch mit dem oben erläuterten "Schlüsselsystem" ermöglicht, dass weiterhin bestehende Fahrzeuge, d.h. Legacy-Fahrzeuge, mit einem beliebigen Kraftstoff betankbar sind.
Figur 1 zeigt eine erste Ausführungsform des erfindungsgemäßen Verfahrens.
Figur 2 zeigt ein Flussdiagramm des erfindungsgemäßen Verfahrens.
Figur 3 zeigt eine zweite Ausführungsform des erfindungsgemäßen Verfahrens.
Figur 4 zeigt eine dritte Ausführungsform des erfindungsgemäßen Verfahrens.

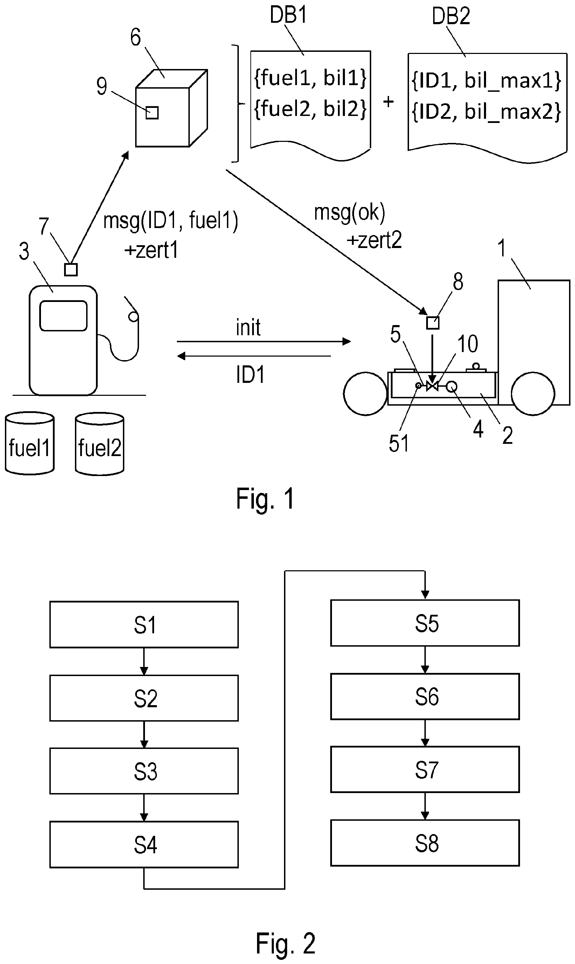

Figur 1 zeigt ein Fahrzeug 1 mit einem Fahrzeugtank 2, dem Kraftstoff über eine Tankstelle 3 zuführbar ist. Der Fahrzeugtank 2 umfasst eine Einspeiseeinheit mit einer Befüllkupplung 4 und einer Befüllleitung 5, welche von der Befüllkupplung 4 zu einer Anschlussstelle 51 in den Fahrzeugtank 2 geführt ist. Über die Einspeiseeinheit kann Kraftstoff in den Fahrzeugtank 2 geführt werden. Das Fahrzeug 1 könnte beispielsweise wie dargestellt einen Tragrahmen und zwei Achsen aufweisen, wobei auf einer oder auf beiden Seiten des Tragrahmens zwischen den Achsen jeweils ein Fahrzeugtank 2 montiert sein kann. Das Fahrzeug 1 ist üblicherweise ein Straßenfahrzeug mit zumindest vier Rädern, könnte jedoch auch ein Zug, ein Flugzeug, ein Schiff, ein U-Boot oder dergleichen sein.

Der Fahrzeugtank 2 ist zur Lagerung von Fluid ausgelegt, z.B. Benzin, Diesel oder ähnlichem. In besonders relevanten Ausführungsformen der Erfindung ist der Fahrzeugtank 2 ein Kryobehälter zur Lagerung von Kryofluid, insbesondere LNG (Liquefied Natural Gas) oder Wasserstoff. Je nach Kryofluid ist der Kryobehälter 2 somit dazu ausgelegt, Kryofluid bei Temperaturen von beispielsweise unter 150 Kelvin, im Fall von Wasserstoff sogar von unter 50 Kelvin oder unter 30 Kelvin oder im Wesentlichen 20 Kelvin, zu lagern. Je nach Anwendung könnte der Kryobehälter 2 beispielsweise zur Lagerung von sLH2 (subcooled liquid hydrogen) oder CcH2 (cryo-compressed hydrogen) ausgebildet und damit auch für entsprechende hohe Drücke ausgelegt sein, z.B. für Maximaldrücke zwischen 1 bar und 350 bar.

In anderen Varianten könnte der Kraftstoff jedoch auch Strom sein. In diesem Fall wird statt einem Fahrzeugtank 2 eine Batterie vorgesehen. Im Allgemeinen können die Batterie und der Fahrzeugtank 2 als Energiespeicher aufgefasst werden. Wenn der Kraftstoff Strom ist, ist die Einspeiseeinheit z.B. ein Ladeanschluss (der gegebenenfalls eine induktive Ladung ermöglicht) der Batterie und entsprechende elektrische Leitungen zwischen dem Ladeanschluss und der Batterie. Die im Folgenden erläuterten Ausführungsformen werden für den Fall erläutert, dass der Kraftstoff ein Fluid ist, wobei diese Ausführungsformen jedoch auch für Strom als Kraftstoff umgesetzt werden können. Weiters werden im Folgenden die Begrifflichkeiten "tanken", "befüllen", "beladen" etc. sowohl für Fluide als auch für Strom verwendet.

Als Hintergrund für die im Folgenden erläuterten Ausführungsformen sei erwähnt, dass die Herkunft des Kraftstoffes, der in den Energiespeicher befüllt bzw. beladen werden soll, für eine Einhaltung einer gewünschten CO2-Bilanz eine wesentliche Rolle spielt. Dies sei am Beispiel von Biomethan und fossilem Methan beispielhaft erklärt. Biomethan und fossiles Methan sind in ihrer chemischen Zusammensetzung nicht unterscheidbar und können durch die chemische Formel CH4 beschrieben werden Bei der Verbrennung von Methan ist aus der Reaktionsgleichung CH4 + 2*O2 = CO2 + 2*H2O ersichtlich, dass sowohl Methan als auch Biomethan bei der Verbrennung dieselbe Menge an CO2 freisetzen. Bei der CO2-Bilanz ist jedoch hinzuzurechnen, dass während der Produktion und Verbrennung von Biomethan nur jenes CO2 freigesetzt wird, das zuvor von den Pflanzen bei der Photosynthese aufgenommen wurde. Daher kann Biomethan als im Wesentlichen CO2 neutral angesehen werden, fossiles Methan jedoch nicht.

Die oben erläuterten Grundsätze können aber auch auf andere Kraftstoffe angewandt werden. Im Falle von Wasserstoff H2 entsteht in einer Brennstoffzelle kein CO2, sodass die Brennstoffzelle im Wesentlichen emissionsfrei arbeitet. Bei der Erstellung der CO2-Bilanz muss jedoch der Ursprung des H2 mitberücksichtigt werden. In vielen Fällen wird Wasserstoff mittels Dampfreformierung aus fossilem Erdgas gewonnen, in welchem Fall eine große Menge an CO2 freigesetzt wird, sodass auch Wasserstoff eine umweltbelastende CO2-Bilanz aufweisen kann. In anderen Fällen wird Wasserstoff jedoch durch Solar- oder Windstrom produziert, in welchem Fall Wasserstoff als im Wesentlichen CO2-neutral oder zumindest weniger umweltbelastend als Wasserstoff in der vorgenannten Herstellungsmethode ist. Die gleichen Überlegungen treffen für Strom zu, da dieser beispielswiese aus Windkraft stammen kann, in welchem Fall sein Umwelteinfluss gering ist, oder aus der Verbrennung von Kohle, in welchem Fall sein Umwelteinfluss größer sein wird.

Um die vorstehenden Erläuterungen zusammenzufassen, beruht die vorliegende Erfindung darauf, dass der Kraftstofftyp nicht isoliert in seiner chemischen und/oder physikalischen Zusammensetzung betrachtet wird, sondern für eine umfassendere Beschreibung des Kraftstoffes auch seine Herkunft berücksichtigt wird. Es könnte daher beispielsweise eine erste Datenbank DB 1 bereitgestellt werden, die eine Kraftstoffidentifikation fuel1, fuel2 (dies könnte eine Seriennummer des Kraftstoffs oder schlichtweg ein gewählter Name wie "Biomethan" sein) mit einer CO2-Bilanz bil1, bil2 des Kraftstoffes verknüpft. Anstatt der CO2-Bilanz kann euch ein äquivalenter Richtwert (beispielsweise eine CO2-Bilanz zuzüglich CO2-Äquivalente von Methanemissionen) oder schlichtweg eine binäre Kennzeichnung "ja"/"nein" herangezogen werden, wobei "ja" eine CO2-Bilanz unter einem vorbestimmten Schwellwert und damit einen umweltschonenden Kraftstoff kennzeichnet und "nein" eine CO2-Bilanz über einem vorbestimmten Schwellwert und damit einen umweltbelastenden Kraftstoff kennzeichnet. Alle diese Kennungen werden als "Kennwerte eines Umwelteinflusses" angesehen.

Die im Folgenden beschriebenen Ausführungsformen sollen nun dazu dienen, dass das Fahrzeug 1 nur mit einem umweltschonenden Kraftstoff bzw. mit einem Kraftstoff mit einem Kennwert des Umwelteinflusses unter einem vorbestimmten Schwellwert betankt wird. Um dies umzusetzen, ist die Betankungseinheit des Fahrzeugs 1 dauerhaft versperrt und soll nur nach einer eingehenden Überprüfung des zu betankenden Kraftstoffes freigegeben werden. Konkret liegt in der Betankungseinheit eine Sperreinrichtung 10 vor, welche in einem geöffneten Zustand das Betanken ermöglicht und in einem geschlossenen Zustand das Betanken verhindert. Die Sperreinrichtung 10 soll in einem Normalzustand geschlossen sein und nur durch eine Freigabenachricht öffenbar sein.

Im Beispiel von Figur 1 wird das Freigeben der Sperreinrichtung 10 dadurch umgesetzt, dass ein externer Server 6 bereitgestellt wird, der einerseits mit einem Sendeempfänger 7 der Tankstelle 3 und andererseits mit einem Sendeempfänger 8 des Fahrzeugs 1 kommuniziert. Zur einfacheren Erläuterung wird im Allgemeinen davon gesprochen, dass der Server 6 mit der Tankstelle 3 bzw. dem Fahrzeug 1 kommuniziert, wobei darunter eine Kommunikation mit dem jeweiligen Sendeempfänger 7, 8 verstanden wird.

In einem eingangs stattfindenden Initialisierungsschritt kann vorgesehen werden, dass die Tankstelle 3 vor dem Start einer Betankung eine eindeutige Identifikation ID1 des Fahrzeugs 1 erhält, z.B. indem ein Zapfhahn der Tankstelle 3 zur Befüllkupplung 4 des Fahrzeugs 1 geführt wird, um an dieser Stelle eine Kurzreichweitenkommunikation, z.B. mittels RFID, durchzuführen. Beispielsweise kann die Tankstelle 3 in einem ersten Schritt S 1, dargestellt in Figur 2, eine Anfrage an das Fahrzeug 1 senden und das Fahrzeug 1 kann in einem zweiten Schritt S2 seine Identifikation ID1 an die Tankstelle 3 übermitteln. Alternativ könnte die Tankstelle 3 auch ein Kennzeichen des Fahrzeugs 1 optisch erfassen. Es sind daher viele Optionen möglich, wie die Tankstelle 3 die Identifikation ID1 des Fahrzeugs 1 erhalten kann.

Wie in Figur 1 dargestellt könnte die Tankstelle 3 mehrere Kraftstoffe fuel1, fuel2 lagern, die insbesondere wie oben erläutert eine gleiche chemische Zusammensetzung, aber eine unterschiedliche CO2-Bilanz (bzw. im Allgemeinen einen unterschiedlichen Umwelteinfluss) aufweisen. Der Benutzer des Fahrzeugs 1 oder der Benutzer der Tankstelle 3 kann in einem Schritt S3 wählen, ob das Fahrzeug 1 mit dem ersten Kraftstoff fuel 1 oder mit dem zweiten Kraftstoff fuel2 betankt werden soll. Diese Auswahl könnte aber auch automatisch stattfinden, z.B. könnte immer der Kraftstoff mit dem niedrigeren Kennwert des Umwelteinflusses ausgewählt werden und nur auf den anderen Kraftstoff zurückgegriffen werden, wenn der erstgenannte Kraftstoff nicht mehr lagernd ist. Selbstverständlich könnte die Tankstelle 3 auch Kraftstoffe mit unterschiedlicher chemischer Zusammensetzung aufweisen, wobei dies in der vorliegenden Erfindung nebensächlich ist und davon ausgegangen wird, dass dem Fahrzeug 1 ein Kraftstoff mit einer für ihn geeigneten Zusammensetzung zugeführt wird.

Vor dem Start der Betankung des Fahrzeugs 1 mit der Identifikation ID1 mit dem Kraftstoff fuel1 sendet die Tankstelle 3 nun in einem Schritt S4 eine Anfragenachricht an den Server 6, wobei die Anfragenachricht die Identifikation ID1 des Fahrzeugs 1 und die Information über den gewünschten Kraftstoff fuel1 enthält. In Figur 1 wird diese Anfragenachricht daher als msg(ID1, fuel1) bezeichnet. Es wäre möglich, dass diese Anfragenachricht auch weitere Informationen enthält, beispielsweise die Menge des betankten Kraftstoffes und/oder einen Zeitstempel der Betankung. Wie weiter unten erläutert könnte die Anfragenachricht aber auch weniger bzw. andere Informationen beinhalten.

Nach Erhalt der Anfragenachricht kann der Server 6, bzw. genauer eine Auswerteeinheit 9 des Servers 6, eine Auswertung vornehmen, ob das Fahrzeug 1 mit dem in der Anfragenachricht spezifizierten Kraftstoff fuel 1 betankt werden darf. Hierfür könnte beispielsweise im Server 6 oder in der Auswerteeinheit 9 die bereits erwähnte erste Datenbank DB 1 vorliegen, in welcher der Kennwert des Umwelteinflusses bil1 des Kraftstoffs fuel1 ausgewiesen ist. In einem Schritt S5 kann in der Auswerteeinheit 9 somit bestimmt werden, welchen Kennwert des Umwelteinflusses der Kraftstoff fuel1 aufweist.

Weiters könnte eine zweite Datenbank DB2 im Server 6 vorliegen, in welcher den mit der Identifikation ID1, ID2 gekennzeichneten Fahrzeugen 1 ein maximaler Kennwert des Umwelteinflusses bil_max1, bil_max2 zugewiesen ist. Die Auswerteeinheit 9 kann in einem Schritt S6 überprüfen, ob eine Berechtigung vorliegt, dass das Fahrzeug 1 mit dem in der Anfragenachricht spezifizierten vorbestimmten Kraftstoff fuel 1 betankt werden darf. Die Überprüfung erfolgt im Beispiel mit den Datenbaken DB 1, DB2 dadurch, dass überprüft wird, ob dem in der Anfragenachricht ausgewiesenen Kraftstoff fuel 1 ein Kennwert des Umwelteinflusses bil1 (aus der Datenbank DB1) zugewiesen ist, der unterhalb des maximalen Kennwerts des Umwelteinflusses bil_max1 des jeweiligen Fahrzeugs 1 mit der Identifikation ID1 liegt (aus der Datenbank DB2). Ist dies der Fall, d.h. ist bil1 < bil_max1, sendet der Server 6 in einem Schritt S7 eine Freigabenachricht an das Fahrzeug 1. Die Freigabenachricht ist in Figur 1 als msg(ok) dargestellt und wird an eine Adresse versandt, die der Identifikation ID1 zugeordnet ist. Die Identifikation ID1 könnte beispielsweise eine Adresse (z.B. GSM-Rufnummer, Netzwerkadresse etc.) sein oder es könnte eine weitere Datenbank mit dieser Verknüpfung vorhanden sein, gegebenenfalls auch außerhalb des Servers 6.

Die erste Datenbank DB1 und/oder die zweite Datenbank DB2 sind jedoch nur optional und die genannte Überprüfung könnte auch auf eine andere Art und Weise erfolgen. Beispielsweise könnte die Bilanz bil1 für den Kraftstoff fuel1 unmittelbar in der Anfragenachricht enthalten sein, d.h. zusätzlich oder alternativ zur Angabe des Kraftstoffs fuel1. In diesem Fall kann die erste Datenbank DB 1 entfallen. Weiters könnte ein globaler maximaler Kennwert des Umwelteinflusses bil_max_glob in der Auswerteeinheit 9 hinterlegt sein, d.h. es wird überprüft, ob der Kennwert des Umwelteinflusses bil1 des Kraftstoffs fuel1 unter dem globalen maximalen Kennwert des Umwelteinflusses bil_max_glob liegt. In diesem Fall dient die Identifikation ID1 in der Anfragenachricht lediglich als Adresse für die Freigabenachricht.

Weiters könnten Möglichkeiten verwirklicht sein, dass beispielsweise Personenkraftwagen strengeren oder weniger strengeren Beschränkungen hinsichtlich des maximalen Kennwerts des Umwelteinflusses einhalten sollen als Lastfahrzeuge oder sicherheitskritische Fahrzeuge wie Polizeifahrzeuge, Feuerwehrfahrzeuge oder Rettungswagen. In anderen Worten könnte die Identifikation ID1 einer Gruppe von Fahrzeugen zugeordnet sein, die einen entsprechenden maximalen Kennwert des Umwelteinflusses bil_max1 nicht überschreiten soll. Eine weitere oder alternative Gruppenbildung könnte nach dem Gewicht des Fahrzeugs vorgenommen werden, wobei schwerere Fahrzeuge oder ältere Fahrzeuge mit einem umweltschonenderen maximalen Kennwert des Umwelteinflusses betankt werden dürfen als entsprechend leichtere oder jüngere Fahrzeuge.

Auch muss der für die Überprüfung herangezogene maximale Kennwert des Umwelteinflusses bil_max1 nicht statisch sein. Beispielsweise könnte vorgesehen werden, dass über einen Zeitabschnitt oder über eine vorbestimmte Menge ein durchschnittlicher Kennwert des Umwelteinflusses nicht überschritten werden soll, d.h. das Fahrzeug könnte zuerst zwei Mal Kraftstoff mit einem umweltschonenderen Kennwert des Umwelteinflusses tanken und danach einmal einen Kraftstoff mit einem umweltbelastenderen Kennwert des Umwelteinflusses. Es ist somit ersichtlich, dass all diese Möglichkeiten vom Wesen der Erfindung mitumfasst sind.

Auch sei festgehalten, dass die Anfragenachricht nicht unbedingt die Identifikation ID1 des Fahrzeugs enthalten muss. Beispielsweise könnte das Fahrzeug 1 eine Identifikation der Tankstelle 3 erhalten, von welcher der Betankungsvorgang gestartet werden soll, und die Identifikation dieser Tankstelle 3 wird zusammen mit der Identifikation ID1 des Fahrzeugs 1 vom Fahrzeug 1 an den Server 6 gesandt. In diesem Fall kann die von der Tankstelle 3 an den Server 6 gesandte Anfragenachricht auch die Identifikation dieser Tankstelle 3 enthalten, sodass die Auswerteeinheit 9 diese beiden Nachrichten entsprechend verknüpfen kann. Es ist daher ersichtlich, dass auch die zwei eingangs genannten Initialisierungsschritte S1, S2 nicht erforderlich sind.

Nachdem die Freigabenachricht vom Server 6 an das Fahrzeug 1 gesandt wurde, wird dieses für die Betankung freigegeben. Konkret wird die eingangs genannte Sperreinrichtung 10 in der Betankungseinheit durch die Freigabenachricht in einem Schritt S8 geöffnet. Im einfachsten Fall kann der Sendeempfänger 8 des Fahrzeugs 1 die an dieses Fahrzeug 1 adressierte Freigabenachricht in ein Entsperrsignal für die Sperreinrichtung 10 umwandeln. Die Sperreinrichtung 10 kann beispielsweise über einen vorbestimmten Zeitraum geöffnet bleiben oder bis der Betankungsvorgang beendet ist, was z.B. durch die Tankstelle angezeigt oder durch das Herausziehen einer Zapfpistole aus der Befüllkupplung 4 erkannt werden kann. In anderen Worten bleibt die Sperreinrichtung 10 über den Zeitraum der Betankung geöffnet und kann danach wieder automatisch geschlossen werden.

Wie in Figur 1 dargestellt könnte die Sperreinrichtung 10 ein ansteuerbares Ventil in der Befüllleitung 5 sein, insbesondere wenn der Energiespeicher mit Fluid befüllt werden soll. Wenn der Energiespeicher mit Strom geladen werden soll, ist die Sperreinrichtung 10 bevorzugt ein Schalter. Weiters könnte die Sperreinrichtung 10 ein ansteuerbarer Verschluss der Befüllkupplung 4 sein. Insbesondere wenn die Sperreinrichtung 10 als ansteuerbares Ventil oder Schalter ausgeführt ist, ist die Sperreinrichtung 10 bevorzugt nicht manuell öffenbar, um Manipulationen zu verhindern. Weiters ist das Ventil bzw. der Schalter bevorzugt so nahe am Fahrzeugtank 2 wie möglich angeordnet, bevorzugt unmittelbar an einer Anschlussstelle 51 der Befüllleitung 5 an den Fahrzeugtank 2, um keine Umgehungsmöglichkeiten zu bieten.

Wenn die Sperreinrichtung 10 derart ausgeführt ist, dass sie in einem Normalzustand geschlossen ist und nur dann öffnet, wenn die Freigabenachricht vom Fahrzeug 1 erhalten wurde, kann somit eine betrügerische Betankung des Fahrzeugs 1 verhindert werden und es ist sichergestellt, dass das Fahrzeug 1 jeweils nur mit einem Kraftstoff mit einer umweltschonenden CO2-Bilanz oder einem anderen niedrigen Kennwert des Umwelteinflusses betankt wird.

In manchen Fällen kann es dennoch erwünscht sein, das Fahrzeug 1 mit einem umweltbelastenden Kraftstoff zu betanken, z.B. wenn kein umweltschonender Kraftstoff an der Tankstelle 3 zur Verfügung steht, oder weil der Server 6 nicht erreichbar ist. In diesem Fall könnte die Sperreinrichtung 10 einen weiteren Steuereingang aufweisen, der mit einem Not-Schalter verbunden ist. Durch Betätigen des Not-Schalters wird die Sperreinrichtung 10 geöffnet, und es kann auch ein Not-Signal abgesetzt werden. Das Not-Signal kann z.B. an die Fahrzeugelektronik weitergeleitet werden, wonach das Fahrzeug nur in einem Modus mit eingeschränkter Leistung betrieben werden kann, z.B. eine reduzierte Maximalgeschwindigkeit aufweist, oder das Notsignal wird an einen entfernten Rechner gesandt, beispielsweise den Server 6 oder eine andere Zentrale, um das Fahrzeug 1 oder dessen Benutzer mit entsprechenden Sanktionen zu belegen.

Das oben erläuterte Verfahren kann durch einige weitere Maßnahmen noch sicherer vor Manipulationen und Betrugsversuchen geschützt werden, wie im Folgenden ausgeführt wird. Beispielsweise könnten die Anfragenachricht und/oder die Freigabenachricht mit einem Zertifikat zert1, zert2 versehen werden, das nur von einer übergeordneten Instanz vergeben wird und fälschungssicher ist.

Um beispielsweise zu verhindern, dass eine Tankstelle 3 vortäuscht, dass sie einen Kraftstoff fuel1 mit einem Kennwert des Umwelteinflusses bil1 betanken wird, obwohl die Tankstelle tatsächlich einen Kraftstoff fuel2 mit einem höheren Kennwert des Umwelteinflusses bil2 betanken wird, kann das genannte Zertifikat zert1 nur an bestimmte Tankstellen 3 vergeben werden. Eine von dieser Tankstelle 3 abgesandte Anfragenachricht kann nun dieses Zertifikat zert1 umfassen. Der Server 6 bzw. die Auswerteeinheit 9 prüft nach dem Empfang einer Anfragenachricht, ob diese das Zertifikat zert1 umfasst und startet die Überprüfung oder das Absenden der Freigabenachricht nur, wenn die Anfragenachricht das Zertifikat zert1 umfasst.

Weiters könnte verhindert werden, dass die Freigabenachricht gefälscht wird, z.B. indem ein Zertifikat zert2 in der Auswerteeinheit 9 vorgesehen wird. Eine von dieser Auswerteeinheit 9 abgesandte Freigabenachricht kann nun dieses Zertifikat zert2 umfassen. Die Sperreinrichtung 10 (oder eine andere Recheneinheit am Fahrzeug 1) prüft nun, ob die Freigabenachricht das Zertifikat zert2 umfasst und wird nur dann entsperrt, wenn dies der Fall ist. Um die Sperreinrichtung 10 besonders manipulationssicher zu machen kann die Recheneinheit zur Überprüfung des Zertifikats zert2 ein integraler Bestandteil der Sperreinrichtung 10 sein, sodass das Prüfen des Zertifikats zert2 nicht umgehbar ist. Diese Recheneinheit könnte beispielsweise als Secure Element ausgeführt sein, das Teil der Sperreinrichtung 10 ist.

Unter einem Secure Element wird hierin eine manipulationssichere physische Komponente verstanden (in der Regel ein sicherer Ein-Chip-Mikrocontroller), die in der Lage ist, Anwendungen sicher zu hosten, beispielsweise gemäß Regeln und Sicherheitsanforderungen, die von einer vertrauenswürdigen Stelle festgelegt wurden.

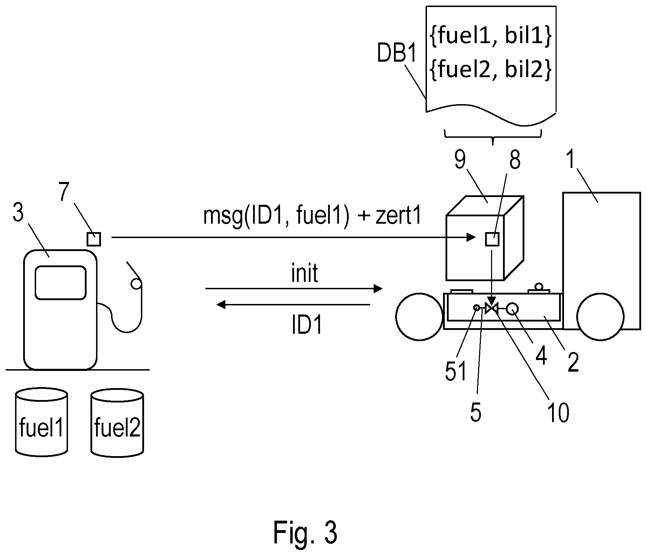

Figur 3 zeigt eine weitere Ausführungsform, die alternativ zur Ausführungsform von Figur 1 ohne externen Server 6 betrieben wird. Hierbei liegt die Auswerteeinheit 9 unmittelbar am Fahrzeug 1 vor. Sofern im Folgenden keine gegenteiligen Aussagen getroffen werden, können alle Aspekte und Varianten von Figur 1 auch auf die Ausführungsform von Figur 3 übertragen werden.

Auch im Verfahren von Figur 3 kann zuerst ein optionaler Initialisierungsablauf mit den oben erläuterten Schritten S1, S2 stattfinden. Hierbei dient die Initialisierung vorrangig dazu, dass die Tankstelle 3 eine Adresse des Fahrzeugs 1 erhält, an welche die Anfragenachricht gesandt werden kann.

Danach kann wieder wie oben spezifiziert optional ein Kraftstoff fuel 1 im Schritt S3 gewählt werden, wonach die Anfragenachricht im Schritt S4 von der Tankstelle 3 an die Auswerteeinheit 9 am Fahrzeug 1 gesandt wird (wobei dies üblicherweise durch eine kabellose Kommunikation erfolgt), wobei die Anfragenachricht in der Regel die Angaben zum Kraftstoffs fuel1 enthält. In einem Schritt kann S5 in der Auswerteeinheit 9 mittels der dort vorliegenden ersten Datenbank DB 1 bestimmt werden, welchen Kennwert des Umwelteinflusses der Kraftstoff fuel 1 aufweist. Alternativ könnte der Kennwert der Kennwert des Umwelteinflusses bil 1 wie oben ausgeführt bereits in der Anfragenachricht enthalten sein. Im Schritt S6 erfolgt die Überprüfung in der Auswerteeinheit 9, ob eine Berechtigung vorliegt, dass das Fahrzeug mit dem in der Anfragenachricht spezifizierten vorbestimmten Kraftstoff betankt werden darf. Dies kann in der Ausführungsform von Figur 3 vorrangig dadurch umgesetzt werden, dass in der Auswerteeinheit 9 ein maximaler Kennwert des Umwelteinflusses bil_max1 des jeweiligen Fahrzeugs 1 hinterlegt ist, d.h. üblicherweise wird die zweite Datenbank DB2 in dieser Ausführungsform nicht in der Auswerteeinheit 9 vorhanden sein. Eine weitere Möglichkeit wäre, dass die Auswerteeinheit 9 mit einem weiteren Server (nicht dargestellt) kommuniziert, um den maximalen Kennwert des Umwelteinflusses bil_max1 für dieses Fahrzeug 1 abzurufen.

Ergibt die Überprüfung, dass eine Berechtigung vorliegt, dass das Fahrzeug 1 mit dem in der Anfragenachricht spezifizierten vorbestimmten Kraftstoff betankt werden darf, d.h. dass bil1 < bil_max1, sendet die Auswerteeinheit 9 im Schritt S7 die Freigabenachricht an die Sperreinrichtung 10, woraufhin diese im Schritt S8 öffnet.

Es ist ersichtlich, dass die Ausführungsform der Figur 3 zwar in einem oberflächlichen Sicherheitslevel ein Betanken mit einem umweltbelastenden Kraftstoff verhindert, da die Sperreinrichtung ohne den Erhalt einer Freigabenachricht eine Betankung verhindert. Da jedoch alle Komponenten frei zugänglich sind und insbesondere die sicherheitskritische Auswerteeinheit nicht auf dem entfernten Server 6 vorliegt, werden üblicherweise weitere Vorkehrungen getroffen, um das Sicherheitslevel zu erhöhen.

Einerseits kann auch bei der Ausführungsform von Figur 3 vorgesehen werden, das genannte erste Zertifikat zert1 an der Tankstelle 3 vorzusehen. Eine von dieser Tankstelle 3 abgesandte Anfragenachricht kann nun dieses Zertifikat zert1 umfassen. Die Auswerteeinheit 9 prüft nach dem Empfang einer Anfragenachricht, ob diese das Zertifikat zert1 umfasst und startet die Überprüfung oder das Absenden der Freigabenachricht nur, wenn die Anfragenachricht das Zertifikat zert1 umfasst.

Insbesondere kann die Auswerteeinheit 9 in einem sogenannten Secure Element vorliegen. Es wird auf die obige Definition des Secure Elements verwiesen.

Wenn die Auswerteeinheit 9 in einem Secure Element vorliegt, kann der Algorithmus zum Authentifizieren des ersten Zertifikats und oder der Algorithmus zum Überprüfen, ob eine Berechtigung vorliegt, dass das Fahrzeug 1 mit dem in der Anfragenachricht spezifizierten vorbestimmten Kraftstoff betankt werden darf, nicht von außen beeinflusst werden. In anderen Worten gibt es durch das Secure Element keine Möglichkeit, die genannten Algorithmen zu manipulieren oder zu umgehen.

Das Secure Element mit der Auswerteeinheit 9 ist bevorzugt integraler Bestandteil der Sperreinrichtung 10 und beispielsweise unlösbar mit dieser verbunden. Dadurch kann die Freigabenachricht unmittelbar auf kabelgebundenem Weg (oder auch über einen integrierten Schaltkreis) an die Sperreinrichtung 10 gesandt werden. Falls erforderlich könnte die Freigabeeinrichtung auch kabellos übertragen werden.

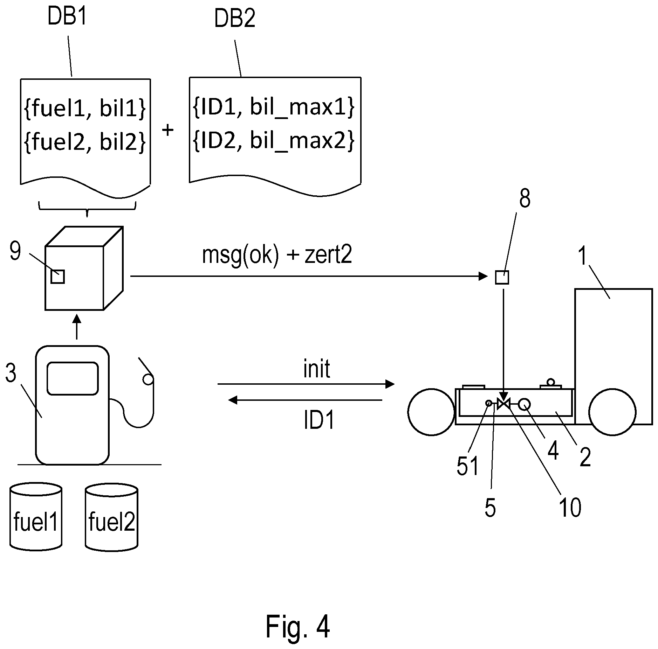

Auch Figur 4 zeigt eine weitere Ausführungsform, die alternativ zur Ausführungsform von Figur 1 ohne externen Server 6 betrieben wird. Hierbei liegt die Auswerteeinheit 9 unmittelbar an der Tankstelle 3 vor. Sofern im Folgenden keine gegenteiligen Aussagen getroffen werden, können alle Aspekte und Varianten von Figur 1 bzw. Figur 3 auch auf die Ausführungsform von Figur 4 übertragen werden.

Auch im Verfahren von Figur 4 kann zuerst ein optionaler Initialisierungsablauf mit den oben erläuterten Schritten S1, S2 stattfinden. Dadurch kann die Tankstelle 3 eine eindeutige Identifikation ID1 des Fahrzeugs 1 oder zumindest dessen Adresse empfangen, damit an diese Adresse die Freigabenachricht gesandt werden kann.

Danach kann wieder wie oben spezifiziert optional ein Kraftstoff fuel 1 im Schritt S3 gewählt werden, wonach wird die Anfragenachricht im Schritt S4 an die Auswerteeinheit 9 an der Tankstelle 3 gesandt wird, wobei diese Angaben zum Kraftstoffs fuel1 enthält. In einem Schritt kann S5 in der Auswerteeinheit 9 mittels der dort vorliegenden ersten Datenbank DB 1 bestimmt werden, welchen Kennwert des Umwelteinflusses der Kraftstoff fuel 1 aufweist. Alternativ könnte der Kennwert des Umwelteinflusses bil1 wie oben ausgeführt bereits in der Anfragenachricht enthalten sein. Im Schritt S6 erfolgt die Überprüfung in der Auswerteeinheit 9, ob eine Berechtigung vorliegt, dass das Fahrzeug mit dem in der Anfragenachricht spezifizierten vorbestimmten Kraftstoff betankt werden darf. Hier kann bevorzugt wieder die zweite Datenbank DB2 wie oben erläutert zum Einsatz kommen. Auch hier wäre eine weitere Möglichkeit, dass die Auswerteeinheit 9 mit einem weiteren Server (nicht dargestellt) kommuniziert, um dien maximalen Kennwert des Umwelteinflusses bil_max1 für dieses Fahrzeug 1 abzurufen.

Ergibt die Überprüfung, dass eine Berechtigung vorliegt, dass das Fahrzeug 1 mit dem in der Anfragenachricht spezifizierten vorbestimmten Kraftstoff betankt werden darf, d.h. dass bil1 < bil_max1, sendet die Auswerteeinheit 9 im Schritt S7 die Freigabenachricht an die Sperreinrichtung 10, d.h. von der Tankstelle 3 zum Fahrzeug 1 (wobei dies üblicherweise durch eine kabellose Kommunikation erfolgt), woraufhin diese im Schritt S8 öffnet.

Auch bei der Ausführungsform von Figur 4 können zusätzliche Sicherheitsaspekte vorgesehen werden, wobei z.B. das genannte zweite Zertifikat zert2 an der Tankstelle 3 vorgesehen werden kann. Eine von dieser Tankstelle 3 abgesandte Freigabenachricht kann nun dieses Zertifikat zert2 umfassen. Die Sperreinrichtung 10 (die hierfür bevorzugt mit einem Secure Element zur Überprüfung des zweiten Zertifikats zert2 ausgestattet ist, siehe oben) prüft nach dem Empfang einer Freigabenachricht, ob diese das Zertifikat zert2 umfasst und öffnet nur, wenn die Freigabenachricht das Zertifikat zert2 umfasst.

Auch kann die Auswerteeinheit 9 in einem sogenannten Secure Element vorliegen. Es wird auf die obige Definition des Secure Elements verwiesen. Es ist ersichtlich, dass bei der Variante von Figur 4 zwei Secure Elements eingesetzt werden können, und zwar ein erstes Secure Element an der Tankstelle 3, das die Auswerteeinheit 9 umfasst, und ein zweites Secure Element am Fahrzeug 1, in dem der Algorithmus zur Überprüfung des zweiten Zertifikats zert2 vorliegt.

An dieser Stelle sei noch darauf eingegangen, was passiert, wenn ein Fehler im Verfahren der Schritte S1-S8 vorliegt. Beispielsweise könnte die Auswerteeinheit 9 im Schritt S5 der Überprüfung feststellen, dass keine Berechtigung vorliegt, dass das Fahrzeug 1 mit dem in der Anfragenachricht spezifizierten vorbestimmten Kraftstoff fuel 1 betankt werden darf, z.B. da dieses Fahrzeug seine monatliche Quote an umweltschädlichem Treibstoff bereits getankt hat. In diesem Fall könnte die Auswerteeinheit 9 eine entsprechende Fehlermeldung an die Tankstelle 3 und/oder das Fahrzeug 1 senden, sodass im Schritt S3 ein anderer Kraftstoff gewählt werden kann. Weiters könnte die Auswerteeinheit 9 feststellen, dass die Anfragenachricht kein oder kein gültiges erstes Zertifikat zert1 aufweist, wonach die Auswerteeinheit 9 dies der Tankstelle 3, dem Fahrzeug 1 und/oder einer Zentrale zur Anzeige eines Betrugs mitteilen könnte. Gleichfalls könnte die Sperreinrichtung 10 oder deren Recheneinheit feststellen, dass die Freigabenachricht kein gültiges zweites Zertifikat aufweist, wonach diese Einheit dies der Tankstelle 3, dem Fahrzeug 1 und/oder einer Zentrale zur Anzeige eines Betrugs mitteilen könnte.

Weiters sei an dieser Stelle festgehalten, dass eine Kommunikation zwischen Tankstelle 3 und Fahrzeug 1 bevorzugt über eine Kurzreichweitenkommunikation wie RFID stattfindet, wobei dies jedoch nicht zwingend ist. Es könnte beispielsweise auch eine Kommunikation über ein zelluläres Mobilfunknetz oder das Internet erfolgen. Im Allgemeinen erfolgt diese Kommunikation bevorzugt über Funk, d.h. kabellos, wobei die Kommunikation auch über entsprechende Kontakte an der Zapfpistole und der Befüllkupplung 4 kabelgebunden erfolgen kann. Eine Kommunikation des Servers 6 und der Tankstelle 3 bzw. dem Fahrzeug 1 erfolgt bevorzugt über ein zelluläres Mobilfunknetz oder das Internet.

Aus den Figuren 1, 3 und 4 ist weiters ersichtlich, dass die Tankstelle 3 den ersten Kraftstoff fuel 1 und den zweiten Kraftstoff fuel2 physisch getrennt voneinander lagern kann, d.h. es werden an der Tankstelle auch zwei gesonderte Zapfhähne vorgesehen, wobei ein Zapfhahn nur den ersten Kraftstoff fuel 1 ausgibt und der andere Zapfhahn nur den zweiten Kraftstoff fuel2 ausgibt. Die erste Meldenachricht wird hierbei auf Basis eines Messsignals eines Massenstromzählers erzeugt, der die Ausgabe des jeweiligen Kraftstoffes fuel1, fuel2 misst. In einem derartigen System können besondere Sicherheitsvorkehrungen vorgesehen werden, z.B. kann die Einspeiseeinheit des genannten Fahrzeugs 1, das nur umweltschonend tanken soll, eine speziell ausgeführte Befüllkupplung 4 aufweist, in welche der erste Zapfhahn einführbar ist, aber nicht der zweite Zapfhahn. Bei Legacy-Fahrzeugen, welche auch umweltbelastend tanken können, kann eine Legacy-Befüllkupplung 4 vorgesehen sein, wobei sowohl der erste Zapfhahn als auch der zweite Zapfhahn in die Legacy-Befüllkupplung 4 einführbar sind. Diese Ausführungen sind jedoch keinesfalls zwingend.

In der Praxis verhält es sich bei einigen Tankstellen 3 derart, dass diese die genannten Kraftstoffe fuel1, fuel2 mit der gleichen chemischen Zusammensetzung aber unterschiedlichen CO2-Bilanz geliefert bekommen und in einem einzigen Speicher (oder mehreren Speichern) als Gemisch lagern. Hierbei kann in der Tankstelle 3 eine interne Buchhaltung über Herkunftszertifikate (d.h. andere Zertifikate als die genannten Zertifikate zert1, zert2 zur Überprüfung der Authentizität der Meldenachrichten) führen, um sicherzustellen, dass nicht mehr umweltfreundlicher Kraftstoff an Fahrzeuge 1 abgegeben wird, als der Tankstelle 3 tatsächlich zur Verfügung steht. Diese Herkunftszertifikate können der ersten Meldenachricht angehängt sein und in der Auswerteeinheit 9 oder im Fahrzeug 1 zum späteren Nachweis abrufbar gespeichert werden. Global betrachtet beeinflusst dies die Wirkungsweise des genannten Systems jedoch nicht, da einfach davon ausgegangen wird, dass die Tankstelle 3 nur den gewünschten Kraftstoff fuel 1, fuel2 abgegeben hat.

In wieder anderen Varianten können Tankstellen 3 vorgesehen werden, die nur vorbestimmte Kraftstoffe lagern, bevorzugt nur einen einzigen Kraftstoff, z.B. einen umweltfreundlichen Kraftstoff mit einem niedrigen Kennwert der CO2-Bilanz. Wenn die zweite Meldenachricht eine aktuelle Positionsangabe wie einen GPS-Fix umfasst, kann in der Auswerteeinheit 9 überprüft werden, ob es plausibel ist, dass der in der ersten Meldenachricht ausgewiesene Kraftstoff fuel 1, fuel2 an dem Ort der Betankung auch tatsächlich betankt wurde. Hierfür kann die Auswerteeinheit 9 beispielsweise auf eine weitere Datenbank zugreifen, in der einem Tankstellenort der dort zur Verfügung stehende Kraftstoff fuel1, fuel2 zugewiesen ist.

Als weitere Sicherheitsstufen können in dem beschriebenem System Massenbilanzen über die Tankstelle 3 und/oder über das Fahrzeug 1 gezogen werden. Um eine Massenbilanz über die Tankstelle 3 zu ziehen, können die folgenden Verfahrensschritte durchgeführt werden:
- Ermitteln der Mengen von an die Tankstelle 3 zugeführten Kraftsoffen und vergleichen, gegebenenfalls mittels der in der Auswerteeinheit 9 hinterlegten Dateneinträge DE, ob die an Fahrzeuge 1 abgegebene Menge an Kraftstoffen mit der an die Tankstelle zugeführten Menge an Kraftstoffen übereinstimmt, wobei zwischen Kraftstoffen mit gleicher chemischer Zusammensetzung aber unterschiedlicher CO2-Bilanz unterschieden wird.
Mit diesen Verfahrensschritten kann überprüft werden, ob die Tankstelle 3 tatsächlich nur so viel umweltfreundlichen Kraftstoff ausgibt, wie sie erhalten hat.

Um eine Massenbilanz über das Fahrzeug 1 zu ziehen, können die folgenden Verfahrensschritte durchgeführt werden:
- Schätzen einer Menge von Kraftstoff, die vom Fahrzeug 1 verbraucht wurde, wobei das Schätzen anhand einer vom Fahrzeug gefahrenen Wegstrecke durchgeführt wird, und Vergleichen, ob diese geschätzte Menge an Kraftstoff mit einer Menge an getankten Kraftstoff übereinstimmt, die in den Dateneinträgen DE ausgewiesen ist.
In dieser Variante wird die erste Meldenachricht und/oder die zweite Meldenachricht die getankte Menge an Kraftstoff umfassen. Durch die Massenbilanz über das Fahrzeug kann überprüft bzw. plausibilisiert werden, ob tatsächlich alle Dateneinträge DE vorliegen, um mathematisch auf die vom Fahrzeug gefahrene Wegstrecke zu kommen. Ist dies nicht der Fall, muss davon ausgegangen werden, dass das Fahrzeug 1 Betankungsvorgänge nicht gemeldet hat und die Sensoreinheit 10 dabei umgangen werden konnte.

In allen vorgenannten Ausführungsformen wurde die Anfragenachricht unmittelbar von jener Tankstelle 3 gesandt, die den Betankungsvorgang durchführt. Dadurch kann auch tankstellenseitig eine genaue Zuordnung vorgenommen werden, welcher Kraftstoff fuel 1 an welches Fahrzeug 1 abgegeben wird.

In anderen Ausführungsformen könnte jedoch auch ein Tankstellensystem betrachtet werden, das mehrere Tankstellen 3 umfassen kann. In dieses Tankstellensystem kann beispielsweise ein erster Kraftstoff fluid 1 und ein zweiter Kraftstoff fluid2 eingebracht werden. Wie oben beschrieben können diese Kraftstoffe fluid 1, fluid2 unterschiedliche Kennwerte der Umweltbelastung aufweisen. In einem derartigen Tankstellensystem erfolgt jedoch keine strikte Trennung der Kraftstoffe fluid 1, fluid2, da diese wie oben beschrieben eine gleiche chemische Zusammensetzung aufweisen können oder als Strom gleichwertig anzusehen sind. Eine Tankstelle 3 muss somit jedenfalls nicht wissen, ob ihr nun tatsächlich mit dem Kraftstoff fluid 1 oder mit dem Kraftstoff fluid2 zugeliefert wurde. Es ist jedoch wichtig festzuhalten, dass dennoch wohlbekannt ist, wie viel Kraftstoff fluid 1 und wieviel Kraftstoff fluid2 sich in diesem Tankstellensystem befindet. In anderen Worten kann nicht mehr umweltschonender Kraftstoff fluid 1 aus diesem Tankstellensystem entnommen werden, als in dieses eingebracht wird.

Wenn ein Benutzer nun wünscht, dass sein Fahrzeug 1 mit einem umweltschonenden Kraftstoff fuel 1 betankt wird, kann er dieses bei einer Tankstelle 3 oder auch beim Tankstellensystem (z.B. online über eine Plattform) für einen Betankungsvorgang erwerben. Beispielsweise erwirbt der Benutzer des Fahrzeugs 1 20 Liter des Kraftstoffes fuel1, sodass z.B. von der Onlineplattform die Anfragenachricht an die Auswerteeinheit 9 gesandt wird. die restlichen Schritte können wie oben für die Figuren 1 bis 3 beschrieben stattfinden.

## Patentansprüche

1. Verfahren zur Betankung in einem System umfassend ein Fahrzeug (1) und eine Auswerteeinheit (9),
wobei das Fahrzeug (1) einen Energiespeicher, insbesondere einen Fahrzeugtank (2) zur Lagerung von fluidem Kraftstoff, und eine mit dem Energiespeicher verbundene Einspeiseeinheit aufweist, wobei weiters eine ansteuerbare Sperreinrichtung (10) in der Einspeiseeinheit vorliegt, und wobei die Sperreinrichtung (10) in einem geöffneten Zustand das Betanken ermöglicht und in einem geschlossenen Zustand das Betanken verhindert,
wobei das Verfahren die folgenden Schritte umfasst:
- Auswählen eines gewünschten Kraftstoffs und Senden einer Anfragenachricht an die Auswerteeinheit (9), wobei die Anfragenachricht einen Kennwert eines Umwelteinflusses, insbesondere eine CO2-Bilanz, des gewählten Kraftstoffes oder eine Identifikation der Herkunft des gewählten Kraftstoffes umfasst,
- in der Auswerteeinheit (9), Empfangen der Anfragenachricht und Überprüfen, ob eine Berechtigung vorliegt, dass das Fahrzeug (1) gemäß dem in der Anfragenachricht spezifizierten Kennwert des Umwelteinflusses des Kraftstoffes oder der Identifikation der Herkunft des Kraftstoffes mit diesem Kraftstoff betankt werden darf,
- in der Auswerteeinheit (9), Senden einer Freigabenachricht an die Sperreinrichtung (10) zum Öffnen der Sperreinrichtung (10), wenn die Überprüfung ergab, dass das Fahrzeug (1) mit dem Kraftstoff betankt werden darf,
wobei die Sperreinrichtung (10) in einem Normalzustand in einem geschlossenen Zustand vorliegt und nur nach Erhalt der Freigabenachricht für den Zeitraum der Betankung und gegebenenfalls über einen Not-Schalter öffenbar ist.

2. Verfahren nach Anspruch 1, wobei der Schritt des Überprüfens, ob eine Berechtigung vorliegt, den folgenden Schritt umfasst:
- Überprüfen, ob der in der Anfragenachricht spezifizierte Kennwert des Umwelteinflusses unterhalb eines für das Fahrzeug (1) vorgesehenen Schwellwerts liegt.

3. Verfahren nach Anspruch 1 oder 2, wobei die Auswerteeinheit (9) in einem Server (6) vorliegt, wobei ein Sendeempfänger (7) einer Tankstelle (3) oder eines Tankstellensystems (3)die Anfragenachricht an den Server (6) sendet und wobei das Fahrzeug (1) einen Sendeempfänger (8) aufweist, welcher die Freigabenachricht vom Server (6) empfängt.

4. Verfahren nach Anspruch 1 oder 2, wobei die Auswerteeinheit (9) am Fahrzeug (1) vorliegt und ein Sendeempfänger (7) einer Tankstelle (3) oder eines Tankstellensystems (3)die Anfragenachricht an einen mit der Auswerteeinheit (9) verbundenen Sendeempfänger (8) am Fahrzeug (1) sendet.

5. Verfahren nach Anspruch 1 oder 2, wobei die Auswerteeinheit (9) an einer Tankstelle (3) vorliegt und die Tankstelle (3) einen mit der Auswerteeinheit (9) verbundenen Sendeempfänger (7) aufweist, welcher die Freigabenachricht an einen mit der Sperreinrichtung (10) verbundenen Sendeempfänger (8) am Fahrzeug (1) sendet.

6. Verfahren nach einem der Ansprüche 1 bis 5, umfassend die Schritte:
- Hinterlegen eines ersten Zertifikats (zert1) in einer Tankstelle (3), wobei das erste Zertifikat (zert1) als Teil der Anfragenachricht an die Auswerteeinheit (9) gesandt wird; und
- Überprüfen der Authentizität des ersten Zertifikats (zert1) in der Auswerteeinheit (9) vor dem Überprüfen oder Senden der Freigabenachricht.

7. Verfahren nach einem der Ansprüche 1 bis 6, umfassend die Schritte:
- Hinterlegen eines zweiten Zertifikats (zert2) in der Auswerteeinheit (9), wobei das zweite Zertifikat (zert2) als Teil der Freigabenachricht an die Sperreinrichtung (10) gesandt wird; und
- Überprüfen der Authentizität des zweiten Zertifikats (zert2) in der Sperreinrichtung (10) oder einer damit verbundenen Recheneinheit vor dem Öffnen der Sperreinrichtung (10).

8. Verfahren nach einem der Ansprüche 1 bis 7, wobei das Betätigen des Not-Schalters die folgenden Schritte auslöst:
- Öffnen der Sperreinrichtung (10) und Ausgeben eines Not-Signals.

9. Verfahren nach Anspruch 8, wobei das Not-Signal an eine Motorsteuerung ausgegeben wird und die Motorsteuerung nach Erhalt des Not-Signals nur einen Fahrzeugbetrieb mit eingeschränkter Leistung ermöglicht.

10. Verfahren nach Anspruch 8 oder 9, wobei das Not-Signal an einen entfernten Server gesandt wird.

11. Verfahren nach einem der Ansprüche 1 bis 10, wobei die Auswerteeinheit (9) in einem Secure Element vorliegt, in dem bevorzugt auch das erste Zertifikat (zert1) oder das zweite Zertifikat (zert2) vorliegt.

12. Verfahren nach einem der Ansprüche 1 bis 11, wobei das System ferner eine Tankstelle (3) umfasst, welche einen ersten Kraftstoff (fuel1) und einen zweiten Kraftstoff (fuel2) zur Verfügung stellt, wobei der erste Kraftstoff (fuel1) und der zweite Kraftstoff (fuel2) eine im Wesentlichen gleiche chemische Zusammensetzung aber einen unterschiedlichen Kennwert des Umwelteinflusses des Kraftstoffes oder eine unterschiedliche Identifikation der Herkunft des Kraftstoffes aufweisen.

13. Verfahren nach Anspruch 12, wobei die Tankstelle einen ersten Zapfhahn aufweist, über welchen der erste Kraftstoff betankbar ist, und einen zweiten Zapfhahn aufweist, über welchen der zweite Kraftstoff betankbar ist, wobei die Betankungseinheit des genannten Fahrzeugs (1) eine Befüllkupplung (4) aufweist, in welche der erste Zapfhahn einführbar ist, aber nicht der zweite Zapfhahn.

14. Verfahren nach Anspruch 13, wobei das System fernen ein Legacy-Fahrzeug umfasst, welches eine Legacy-Befüllkupplung (4) zur Betankung aufweist, wobei sowohl der erste Zapfhahn als auch der zweite Zapfhahn in die Legacy-Befüllkupplung (4) einführbar sind.
